# EUROPÄISCHE PATENTSCHRIFT

(11) **EP 0 358 987 B1**
(45) Veröffentlichungstag und Bekanntmachung des Hinweises auf die Patenterteilung: **05.05.1993**
(21) Anmeldenummer: 89115522.8
(22) Anmeldetag: 23.08.1989
(51) Int. Cl.: H04N 9/64

(54) **Bildwiedergabegerät mit einer Kathodenstrahlröhre und einer Anordnung zur Messung des Strahlstromes**
Display apparatus with a cathode ray tube and a device for measuring the beam circuit
Appareil de visualisation avec tube à rayons cathodiques et dispositif de mesure du courant de faisceaux

(30) Priorität: 03.09.1988 DE 3830074
(43) Veröffentlichungstag der Anmeldung: 21.03.1990
(73) Patentinhaber: Deutsche Thomson-Brandt GmbH, 78003 Villingen-Schwenningen (DE)
(72) Erfinder: Hartmann, Uwe, D-8391 Untergriesbach (DE); Ohnemus, Fritz, D-7730 Villingen-Schwenningen (DE)

(56) Entgegenhaltungen:
- EP-A- 0 239 014
- DE-A- 2 333 391
- FR-A- 1 351 677

## Beschreibung

Die Erfindung betrifft ein Bildwiedergabegerät mit einer Katodenstrahlröhre und einer Schaltungsanordnung zur Messung des Strahlstromes während einer bestimmten Zeitdauer, insbesondere während einiger Zeilen außerhalb des wiederzugebenden Bildes zwecks automatischer Einstellung des Sperrpunktes des Elektronenstrahlsystems.

Bildwiedergabegeräte besitzen eine Katodenstrahlröhre, deren Leuchtschicht von Röhre zu Röhre infolge Herstellertoleranzen unterschiedliche Wirkungsgrade haben. Auch kann sich dieser Wirkungsgrad ein und derselben Katodenstrahlröhre während ihrer Lebensdauer verändern. Deshalb sind derartige Bildwiedergabegeräte mit einer Automatik versehen, die bei kleiner Leuchtdichte diese konstant hält. Insbesondere bei Dreistrahl-Farbbildröhren mit Elektronenstrahlsystemen für Rot, Grün und Blau ist dieses Konstanthalten besonders wichtig, damit keine Farbverfälschungen, insbesondere bei kleinen Leuchtdichten entstehen können. Dazu müssen die Sperrpunkte (cut-off) der drei Systeme genau aufeinander abgestimmt werden. Bei kleiner Leuchtdichte reagiert das menschliche Auge besonders empfindlich auf Farbverfälschungen, weshalb gerade bei Farbbildröhren die Einstellung und Stabilität der cut-off-Punkte besonders wichtig ist. Durch die unterschiedlichen Wirkungsgrade der Leuchtphosphore ist der optimale cut-off-Punkt für jedes Strahlsystem verschieden. Jeder cut-off-Einstellung entspricht ein ganz bestimmter Strahlstrom, der gemessen und über eine Regelschleife konstantgehalten wird. Dieser Strahlstrom liegt in der Größe von 30 uA. Um den Strahlstrom messen zu können, werden während der Dauer bestimmter Zeilen, bei Dreistrahlröhren während je einer Zeile pro System, die dem cut-off-Punkt entsprechenden Meßstrahlen erzeugt. Bei üblichen Fernsehempfangsgeräten geschieht dies während des nicht sichtbaren Hinlaufes der Elektronenstrahlen, d.h. außerhalb des wiederzugebenden Bildinhaltes, z.B. während der 17., 18. und 19. Zeile. Dieses ist möglich, weil gewöhnlich der Bildwiedergabeschirm überschrieben wird, so daß die Meßzeilen unsichtbar bleiben, die Meßschaltung während dieser Zeilen auftretenden Strahlströme aber auswertet.
Anders verhält es sich bei den sogenannten Monitorgeräten, bei denen der Bildschirm größer ist als das wiedergegebene Bildraster. Dadurch können die Meßzeilen optisch hervortreten, was als störend empfunden wird.

Der Erfindung liegt die Aufgabe zugrunde, diesen störenden Einfluß der Meßzeilen zu beseitigen. Diese Aufgabe wird durch die im Patentanspruch angegebene Maßnahme gelöst. Weitere vorteilhafte Ausgestaltungen der Erfindung sind in den Unteransprüchen beschrieben.

Nachfolgend wird die Erfindung mit Hilfe der Zeichnung beschrieben.
- Figur 1: zeigt ein erstes Ausführungsbeispiel und
- Figur 2: zeigt ein zweites Ausführungsbeispiel der Erfindung.

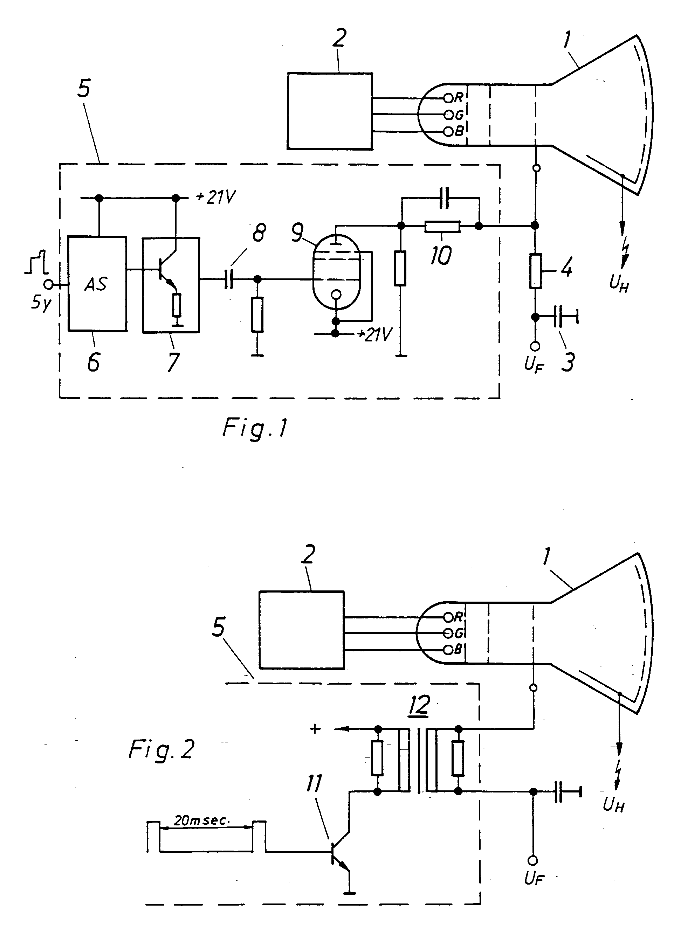

In Figur 1 ist eine Farbbildröhre 1 mit ihren drei Elektronenstrahlsystemen R,G und B dargestellt, die aus einer Videoendstufe 2 angesteuert werden. Die Farbbildröhre 1 besitzt neben einigen nicht näher bezeichneten Gitteranschlüssen noch den Hochspannungsanschluß U_{H} sowie den Anschluß für die Fokussierspannung U_{F} am Kondensator 3 über den Widerstand 4. Bei optimal eingestellter Fokussierspannung, die dem nicht dargestellten Zeilentransformator entnommen wird, ist die Punktschärfe der auf dem Bildschirm auftreffenden Elektronenstrahlen am größten.

Die Erfindung sieht eine Anordnung 5 vor, welche die Fokussierung während der Dauer der Erzeugung der Meßstrahlen stark herabsetzt. Dieses geschieht dadurch, daß die übliche Fokussierspannung in der Größe von 5 kV auf einen festen niedrigeren Wert geklemmt wird. Dazu wird aus dem Synchronimpuls Sy mit Hilfe des Amplitudensiebes 6 der Bildaustastimpuls erzeugt, der über eine Treiberstufe 7 und eine Differenzierstufe 8 eine Hochvakuumröhre 9 ansteuert, deren Katode an einer im Bildwiedergabegerät ohnehin vorhandenen 21-V-Schiene liegt. So wird die Fokussierelektrode der Katodenstrahlröhre 1 impulsartig über das Übertragungsglied 10 auf diese 21 V gelegt. Das hat eine derart starke Defokussierung der Elektronenstrahlen zur Folge, daß sie nicht mehr sichtbar sind, zumal der Strahlstrom in diesem Zeitpunkt äußerst gering ist.

Figur 2 zeigt die Lösung mit einem Schalttransistor 11, der über einen Übertrager 12 an die Fokuselektrode der Katodenstrahlröhre 1 angeschaltet ist. In die Sekundärwicklung 13 des Übertragers 12 wird eine negative Impulsspannung während der Bildaustastzeit gekoppelt. Zwecks Unterdrückung von störendem Ausschwingen dieses Impulses ist der Übertrager 12 bedämpft.

## Patentansprüche

1. Bildwiedergabegerät mit einer Katodenstrahlröhre und einer Schaltungsanordnung zur Messung des Strahlstromes während einer bestimmten Zeitdauer, insbesondere während einiger Zeilen außerhalb des wiederzugebenden Bildes zwecks automatischer Einstellung des Sperrpunktes des Elektonenstrahlsystemes, dadurch gekennzeichnet, daß eine Anordnung (5) vorgesehen ist, welche den Elektronenstrahl während dieser bestimmten Zeitdauer defokussiert.

2. Bildwiedergabegerät nach Anspruch 1, dadurch gekennzeichnet, daß die Anordnung (5) mit Hilfe eines elektronischen Schalters die Fokusspannung der Katodenstrahlröhre (1) herabsetzt.

3. Bildwiedergabegerät nach Anspruch 2, dadurch gekennzeichnet, daß der elektronische Schalter durch eine Hochvakuumröhre (9) gebildet wird, die mit der Fokuselektrode der Katodenstrahlröhre (1) verbunden ist.

4. Bildwiedergabegerät nach Anspruch 2, dadurch gekennzeichnet, daß der elektronische Schalter durch einen Transistor (11) gebildet wird, der über einen Übertrager (12) mit der Fokuselektrode der Katodenstrahlröhre (1) verbunden ist.

5. Bildwiedergabegerät nach Anspruch 4, dadurch gekennzeichnet, daß der Übertrager (12) bedämpft ist.

## Claims

1. Picture reproduction device with a cathode-ray tube and a circuit arrangement for measuring the cathode-ray current during a particular period of time, in particular during some lines outside the picture to be reproduced, for the automatic adjustment of the cut-off point of the electron beam system, characterised in that an arrangement (5) is provided which defocuses the electron beam during said particular period of time.

2. Picture reproduction device according to claim 1, characterised in that the arrangement (5) reduces the focusing voltage of the cathode-ray tube (1) by means of an electronic switch.

3. Picture reproduction device according to claim 2, characterised in that the electronic switch is formed by a high-vacuum tube (9) which is connected to the focus electrode of the cathode-ray tube (1).

4. Picture reproduction device according to claim 2, characterised in that the electronic switch is formed by a transistor (11) which is connected via a transformer (12) to the focus electrode of the cathode-ray tube (1).

5. Picture reproduction device according to claim 4, characterised in that the transformer (12) is damped.

## Revendications

1. Appareil de visualisation avec un tube à rayons cathodiques et un dispositif de circuit pour mesurer le courant de faisceau pendant une certaine durée, en particulier pendant quelques lignes à l'extérieur de l'image à reproduire pour le réglage automatique du point de blocage du système de faisceau d'électrons, **caractérisé en ce** qu'il est prévu un dispositif (5) qui défocalise le faisceau d'électrons pendant cette durée précise.

2. Appareil de visualisation selon la revendication 1, **caractérisé en ce** que le dispositif (5) diminue la tension de foyer du tube à rayons cathodiques (1) à l'aide d'un commutateur électronique.

3. Appareil de visualisation selon la revendication 2, **caractérisé en ce** que le commutateur électronique est formé par un tube à décharge à vide puossé (9) qui est relié à l'électrode de foyer du tube à rayons cathodiques (1).

4. Appareil de visualisation selon la revendication 2, **caractérisé en ce** que le commutateur électronique est formé par un transistor (11) qui est relié par un translateur (12) à l'électrode de foyer du tube à rayons cathodiques (1).

5. Appareil de visualisation selon la revendication 4, **caractérisé en ce** que le translateur (12) est amorti.
